# EUROPEAN PATENT SPECIFICATION

(11) **EP 4 605 472 B1**
(45) Date of publication and mention of the grant of the patent: **10.06.2026**
(21) Application number: 23783802.4
(22) Date of filing: 02.10.2023
(51) Int. Cl.: C08L 69/00

(54) **METHOD OF PREPARING A HYDROSTABLE THERMOPLASTIC COMPOSITION**
VERFAHREN ZUR HERSTELLUNG EINER HYDROSTABILEN THERMOPLASTISCHEN ZUSAMMENSETZUNG
PROCÉDÉ DE PRÉPARATION D'UNE COMPOSITION THERMOPLASTIQUE HYDROSTABLE

(30) Priority: 18.10.2022 EP 22202279
(43) Date of publication of application: 27.08.2025
(73) Proprietor: SABIC Global Technologies B.V., 4612 PX Bergen op Zoom (NL)
(72) Inventor: JHA, Roshan Kumar, 6160 GA Geleen (NL); KHATOKAR, Rukmini, 6160 GA Geleen (NL); GANGULY, Anirban, 6160 GA Geleen (NL); AT, Kavya, 6160 GA Geleen (NL)
(74) Representative: Sabic Intellectual Property Group
(86) International application number: PCT/EP2023/077224
(87) International publication number: WO 2024/083487

(56) References cited:
- WO-A1-2020/263015

## Description

The present invention relates to a method for the preparation of hydrostable thermoplastic composition comprising polycarbonate and polyester, and to the compositions so prepared themselves. The present invention further relates to an article comprising or consisting of such a composition.

Compositions comprising polycarbonate and polyester have excellent appearance, mechanical properties, dimensional stability, and chemical resistance, and are widely used in various fields. Particularly, a composition composed of polycarbonate and poly(butylene terephthalate), PBT, imparts excellent mechanical properties (such as impact, ductility and dimensional stability) and chemical resistance to the polycarbonate. These compositions are useful in fields such as interior and exterior parts in automobiles specifically. For example, WO2020/263015A1 discloses a thermoplastic resin composition based on a blend of polycarbonate (PC), polybutylene terephthalate (PBT), and polyethylene terephthalate (PET). The composition further includes a methylmethacrylate-butadiene-styrene (MBS) graft copolymer as an impact modifier and a glycidyl group-containing polyolefin-based polymer, which provides low gloss properties while maintaining high impact strength for applications such as automotive interiors.

However, polyesters like PBT having a relatively high amount of -COOH end groups may affect the stability of the polycarbonate in polyester-polycarbonate blends. It is believed that the -COOH end groups of the polyester may cause the polycarbonate to lose molecular weight, resulting in a change of properties of the same. This effect may be enhanced by the presence of catalysts or catalyst residues that may be applied during the manufacture of the polycarbonate.

The impact properties of compositions comprising polycarbonate and polyester may be enhanced by addition of suitable impact modifiers. Such impact modifiers may be prepared by means of an emulsion polymerization process involving the use of process aids such as emulsifiers and coagulation agents. Such process aids, to the extent these would be part of the impact modifier, may also cause decomposition of the polycarbonate, i.e. promote hydrolysis.

Further to the foregoing, it is common to add quenchers to compositions comprising polycarbonate and polyester in order to prevent transesterification of the polyester and the polycarbonate. Such quenchers are typically mildly acidic. In order to maintain a certain level of hydrolytic stability of the composition this quencher needs to be selected such that it is acidic enough to quench residual catalyst in the polyester, but at the same time it does not significantly result in hydrolysis of the polycarbonate.

Therefore, in demanding applications, whereby in particular the compositions may be exposed to humidity at high temperature, it is desired to provide compositions comprising polycarbonate and polyester having an improved hydrolytic stability.

Hydrolytic stabilizers are added to such PC/PBT compositions to improve the hydrolytic stability of the composition. However, the use of such hydrolytic stabilizers in PC/PBT compositions prepared by processes described in the prior art, such as blending all the components in a high-speed mixer or by hand mixing, frequently leads to disadvantages such as unsatisfactory mechanical and thermal properties.

It is an object of the present invention to provide a suitable method for preparation of a thermoplastic composition having good initial mechanical properties and being suitable for use in applications wherein the composition may be exposed to humidity at high temperatures.

It is a further object of the invention to provide for a thermoplastic composition comprising polycarbonate and polyester, wherein the composition has, in combination, good hydrostability, impact properties and heat stability
These objects are met, at least in part, in accordance with the present invention, which is directed at a method for the manufacture of a thermoplastic composition comprising aromatic polycarbonate, polyester, hydrolytic stabilizer composition, optionally impact modifier and optionally other components, comprising the steps of:
a) combining the polyester with the hydrolytic stabilizer composition and optionally the other components in a first melt mixing device so as to form a stabilized polyester,
b) combining said stabilized polyester with the aromatic polycarbonate and optionally the impact modifier in a second melt mixing device.
wherein the hydrolytic stabilizer composition comprises at least one compound containing diimide and/or epoxy functional groups.

Without willing to be bound to it, the present inventors believe that combining the polyester with the hydrolytic stabilizer composition helps in capping the acid end groups of the polyester, thereby resulting in the formation of a stabilized polyester. It is known that higher acid end groups in a polyester leads to higher rate of hydrolysis reaction. Therefore capping the same helps to improve the hydrostability of the polyester. Surprisingly the inventors have found that by making a master batch of polyester with the hydrolytic stabilizer composition prior to combining the so stabilized polyester with aromatic polycarbonate in a two-step process in accordance with the invention, the hydrolytic stability of the thermoplastic composition is improved. It is believed that through this two-step process, one allows a higher residence time for the hydrolytic stabilizer composition to react with the acid end group of the polyester, thereby leading to higher extent of capping of acid end group of PBT by the hydrolytic stabilizer. The reduced the acid end group of the polyester reduces the kinetics of hydrolysis and therefore improves the hydrolytic stability of the composition.

The invention will now be described in more detail.

### Aromatic polycarbonate

In the context of the present invention the term polycarbonate is to be understood as meaning an aromatic polycarbonate. Both of the terms "polycarbonate" and "aromatic polycarbonate" accordingly shall have the same meaning and may be used interchangeably. An aromatic polycarbonate, as known to the skilled person, is a polycarbonate comprising aromatic groups.

Aromatic polycarbonates are generally manufactured using two different technologies. In a first technology, known as the interfacial technology or interfacial process, phosgene is reacted with a bisphenol, typically bisphenol A (BPA) in a liquid phase. Another well-known technology is the so-called melt technology, sometimes also referred to as melt transesterification or melt polycondensation technology. In the melt technology, or melt process, a bisphenol, typically BPA, is reacted with a carbonate, typically diphenyl carbonate (DPC), in the melt phase. Aromatic polycarbonate obtained by the melt transesterification process is known to be structurally different from aromatic polycarbonate obtained by the interfacial process. In that respect it is noted that in particular the so called "melt polycarbonate" typically has a minimum amount of Fries branching, which is generally absent in "interfacial polycarbonate". Apart from that melt polycarbonate typically has a higher number of phenolic hydroxy end groups while polycarbonate obtained by the interfacial process is typically end-capped and has at most 150 ppm, preferably at most 50 ppm, more preferably at most 10 ppm of phenol hydroxyl end-groups. Typically, the amount of phenol hydroxyl end-groups is below the detection limit.

It is preferred that the aromatic polycarbonate comprises or consists of bisphenol A polycarbonate or a mixture of bisphenol A polycarbonates. Preferably, the aromatic polycarbonate of the invention disclosed herein comprises at least 75 wt. %, preferably at least 95 wt. % of bisphenol A polycarbonate based on the total amount of aromatic polycarbonate. More preferably, the aromatic polycarbonate in the composition essentially consists or consists of bisphenol A polycarbonate. It is preferred that the aromatic polycarbonate has a weight average molecular weight (Mw) of 15,000 to 60,000 g/mol determined using gel permeation chromatography with polystyrene standards. Preferably, the Mw of the aromatic polycarbonate is from 20,000 to 45,000 g/mol. If the polycarbonate is a mixture of two or more aromatic polycarbonates then the Mw is to be determined on the basis of the mixture wherein preferably each of the aromatic polycarbonates constituting the mixture has a Mw from 20,000 tp 45,000 g/mol.

In an aspect, the aromatic polycarbonate is an interfacial polycarbonate.

In another aspect, the aromatic polycarbonate is a melt polycarbonate.

In yet another aspect the aromatic polycarbonate is a mixture of from 20 - 80 wt. % or 40 - 60 wt. % of interfacial polycarbonate and from 80 - 20 wt. % or 60 - 40 wt. % of melt polycarbonate, based on the weight of the aromatic polycarbonate.

It is preferred that the aromatic polycarbonate in the composition according to the invention consists of an interfacial polycarbonate and has an endcap level of at least 90 mol. %. In another aspect, the aromatic polycarbonate in the composition according to the invention consists of a melt polycarbonate and has an endcap level of at least 75 mol. %, preferably at least 80 mol. %, more preferably at least 85 mol. %. The endcap level may be at most 95 mol. %, such as at most 90 mol. %. In that respect the endcap level is considered as a value measured on the aromatic polycarbonate of the composition. In yet another aspect, the aromatic polycarbonate may be a mixture of melt polycarbonate and a polycarbonate not manufactured using the melt process such as the interfacial process, as long as the endcap level is at least 75 mol. %.

The aromatic polycarbonate may have a melt volume rate (MVR), determined in accordance with ISO 1133 (300 °C, 1.2 kg) of 1 to 50 cc/10min, specifically 2 to 30 cc/10 min, such as 10 - 15 cc/10 min. The aromatic polycarbonate may comprise two or more aromatic polycarbonates differing in melt volume rate (i.e. in molecular weight). The aromatic polycarbonates of the mixture may both be a bisphenol A polycarbonate homopolymer. In another aspect the aromatic polycarbonate may comprise a polycarbonate copolymer comprising structural units of bisphenol A and structural units from another bisphenol.

### Polyester

The polyester of the composition disclosed herein comprises at least 80 wt. %, preferably at least 90 wt. % of poly(butylene terephthalate) (PBT), based on the weight of the polyester. More preferably the polyester of the composition disclosed herein essentially consists or consists of poly(butylene terephthalate). The PBT may be a mixture of two or more different poly(butylene terephthalate)s, for example a mixture of PBTs with mutually different intrinsic viscosities. The polyester may further comprise mechanically recycled PBT or PBT obtained from (chemically) recycled poly(ethylene terephthalate) (PET). Polyesters such as PBT and PET are well known to a skilled person per se.

The PBT may be a single polymer or may be a combination of two or more, preferably two PBT's having mutually different properties. For example, the PBT may comprise a first PBT and a second PBT each having a different intrinsic viscosity. The PBT in the composition of the invention may accordingly be a blend of such a first and second (or further) PBTs. In this aspect, the first PBT may have an intrinsic viscosity of from 1.1 - 1.4 dl/g and the second PBT may have an intrinsic viscosity of from 0.6 - 0.8 dl/g.

In accordance with the invention, the polyester may have an intrinsic viscosity of 0.4 to about 2.0 dl/g as measured in a 60:40 phenol/tetrachloroethane mixture at 23° C. In the aspect where the polyester is a mixture then this preferred feature applies to the said mixture.

It is preferred that the polyester comprises at least 50 wt. %, preferably at least 75 wt. %, more preferably at least 95 wt. % of PBT on the basis of the weight of the polyester. Preferably, the polyester consists of PBT. Preferably, PBT is the only polyester in the composition.

In an aspect, the polyester may further comprise another polyester, miscible with PBT. Such polyesters include poly(ethylene terephthalate), poly(ethylene naphthalate) (PEN), poly(butylene naphthalate) (PBN), poly(propylene terephthalate) (PPT), poly(cyclohexane dimethanol terephthalate) (PCT), poly(cyclohexane- 1,4-dimethylene cyclohexane-1,4-dicarboxylate) also referred to as poly(1, 4-cyclohexane- dimethanol 1,4-dicarboxylate) (PCCD) and copolyesters, PCTG and PETG., preferably PET. In accordance with this aspect of the invention, the composition preferably comprises from 99 to 80 wt. % of PBT and from 1 to 20 wt. % of one or more of said further polyesters, based on the weight of the polyester. It is preferred that the further polyester is PET.

The polyester may further comprise mechanically recycled PBT or PBT obtained from renewable sources. Polyesters such as PBT are well known to a skilled person per se. The PBT that is used in the composition of the invention may for example be a polymer comprising polymeric units derived from terephthalic acid or a diester thereof such as dimethyl terephthalate, and polymeric units derived from a butanediol, such as 1,4-butanediol.

In any aspect where the polyester comprises PBT, a mixture of PBTs and a polyester not being PBT then the intrinsic viscosity of the polyester is preferably from 0.6 - 1.4 dl/g. The PBT may have a carboxylic end group content of from 10 - 80 mmol/kg, preferably from 20 - 60 mmol/kg, more preferably 20-40 mmol/kg as determined in accordance with ASTM D7409-15.

### Hydrolytic Stabilizer

The hydrolytic stabilizer composition preferably comprises at least one compound compound containing diimide and/or epoxy functional groups. It is preferred that hydrolytic stabilizer essentially comprises at least 80 wt.%, preferably at least 90 wt.%, more preferably at least 95 wt.%, based on the weight of the hydrolytic stabilizer composition of said at least one compound containing diimide and/or epoxy functional groups. It is more preferred that hydrolytic stabilizer essentially consists or consists of said at least one compound compound containing diimide and/or epoxy functional groups.

The thermoplastic composition with improved hydrolytic stability obtainable by the method of the present invention preferably comprises from 0.1 to 10 wt. %, preferably from 0.5 to 3 wt. % of a hydrolytic stabilizer composition comprising at least one compound containing diimide and/or epoxy functional groups, based on the weight of the composition.

The said epoxy compound may have one or more epoxy functional groups. The term "polyfunctional epoxy compound" is defined to embrace a compound having at least two epoxy functional groups. A preferred difunctional epoxy compound is 3,4-epoxycyclohexyl-3,4-epoxycyclohexylcarboxylate, commercially available as ERL-4221 epoxy from Union Carbide. Examples of other preferred difunctional epoxy compounds are bis(3,4-epoxycyclohexylmethyl)adipate, vinylcyclohexene di-epoxide, bisphenol diglycidyl ethers, diglycidyl adducts of amides, diglycidyl adducts of carboxylic acids and the like.

Other hydrolytic stabilizers comprising epoxy functional groups may be an ethylene and/or a styrene copolymer, which include repeat units derived from ethylene, and an epoxy comonomer including, for example, glycidyl acrylate, glycidyl methacrylate, glycidyl butyl acrylate, glycidyl vinyl ether, or combinations of two or more thereof. Frequently used ethylene and/or styrene copolymers can further comprise repeat units derived from an ester of unsaturated carboxylic acid including (meth)acrylate or C₁ to C₈ alkyl(meth)acrylate, or combinations of two or more thereof. "(Meth)acrylate", refers to acrylate, alkyl acrylate, methacrylate, or combinations of two or more thereof. Examples of alkyl acrylates include methyl acrylate, ethyl acrylate and butyl acrylate.

The ethylene and/or styrene copolymer can also comprise, consist essentially of, or consist of, repeat units derived from ethylene and/or styrene and an epoxy comonomer including, for example, a glycidyl ester of acrylic acid or methacrylic acid, glycidyl vinyl ether, or combinations thereof, and an additional comonomer such as carbon monoxide.

Such epoxy compounds are commercially available or can be made by techniques well known to those skilled in the art.

In another aspect, the hydrolytic stabilizer composition comprises at least one compound containing diimide functional groups. The said compound preferably contains at least one carbodiimide group. These compounds are known and available in commerce, e.g., Stabaxol P a product of Rhein Chemie Corporation and may be prepared by known methods (for instance European Patent No. 582983; Japanese Patent Publication No. 33279/1972; Journal of Organic Chemistry, 28, 2069-2075 91963); Chemical Review 1981, vol. 81, No. 4, 619-621; Journal of Applied Polymer Science, 1977, vol. 21, 1999-2008).

### Impact modifier

The thermoplastic composition of the invention optionally comprises an impact modifier. The amount of impact modifier may be from 0 - 15 wt. % based on the weight of the composition. Preferably the impact modifier is comprised in the composition in an amount of from 2 - 12 wt. %, more preferably from 4 - 8 wt. %.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers are also used.

The impact modifier preferably comprises or consists of at least one of acrylonitrile-butadiene-styrene (ABS) polymer and/or methyl-methacrylate butadiene-styrene (MBS) polymer.

### Other components

The thermoplastic composition disclosed herein comprise from 0 - 5 wt. % of other components, preferably selected from the group consisting of reinforcing or non-reinforcing fillers, such as for example talc, calcium carbonate, glass flakes, glass fibers and the like, antifog agents, plasticizers, flow enhancing additives, lubricants, pigments, dyes, flame retardants, nucleating agents, thermal stabilizers, UV absorbers, UV stabilizers, dispersants, surfactants, antistatic agents, slip agents, or combinations of two or more thereof. Such further components are known to the skilled person per se.

It is preferred that the other components in accordance with the present invention comprises, based on the weight of the composition, from 0.01 to 1 wt. % of a compound selected from the group consisting of Group IB metal phosphate salts and Group IIB metal phosphate salts. Preferably, the compound is selected from the group consisting of Group IB and/or Group IIB metal acid phosphates, metal acid pyrophosphates, and metal polyphosphates, more preferably the catalyst quencher is a zinc phosphate salt. This compound is used as a quencher for catalyst or catalyst residues in the polyester.

It is preferred that the other components comprises, based on the weight of the composition, from 0.01 to 1 wt. %, preferably from 0.03 to 0.5 wt. %, of a compound containing at least one of alkali metal cations or alkaline earth metal cations and a halide anion, preferably selected from one or more of the group comprising of lithium fluoride, lithium iodide, potassium bromide, potassium iodide, sodium dihydrogen phosphate, sodium acetate, sodium benzoate, sodium caproate, sodium stearate, sodium ascorbate and magnesium caproate.

### Composition

In accordance with the invention the thermoplastic composition comprises, based on the weight of the composition,
(A) from 40 to 70 wt. % of aromatic polycarbonate
(B) from 20 to 40 wt. % of polyester
(C) from 0.1 to 10 wt. % of a hydrolytic stabilizer composition
(D) from 0 to 15 wt. % of impact modifier
(E) from 0 to 5 wt. % of other components

wherein, the combined amounts of (A) to (E) is 100 wt. %, and
wherein the hydrolytic stabilizer composition comprises at least one compound containing diimide and/or epoxy functional groups.

The amount of component (A) may be from 50 to 70 wt. %.

The amount of component (B) may be from 25 to 35 wt. %.

The amount of component (C) may be from 0.5 to 3 wt. %.

The amount of component (D) may be from 2 to 12 wt. %.

The amount of component (E) may be from 0.01 to 3 wt. %.

Preferably, the component (B) comprises or consists of poly(butylene terephthalate). For the avoidance of doubt the skilled person will understand that the total weight of the composition will be 100 wt. % and that any combination of materials which would not form 100 wt. % in total is unrealistic and not according to the invention.

Preferred ranges for the amount of the components and preferred ranges for the properties of the composition may be combined without limitation, provided of course that these fall within the scope of the invention as defined herein in its broadest form. That is to say, a preferred range for one or more of the amounts and/or types of the components constituting the thermoplastic composition may be combined with a preferred range for one or more of the properties of the thermoplastic composition and all such combinations are considered as disclosed herein.

### Method of manufacture of the thermoplastic composition

In accordance with the invention, the thermoplastic composition is prepared by the method comprising the steps of:
a) combining polyester with the hydrolytic stabilizer composition and optionally part or all of the other components, in a first melt mixing device so as to form a stabilized polyester,
b) combining said stabilized polyester with the aromatic polycarbonate and optionally the impact modifier and/ or part or all of the other components in a second melt mixing device.

The addition of the hydrolytic stabilizer composition in step (a) may take place either before the melting of the polyester or after the melting of the polyester or both before and after the melting of the polyester.

The residence time in step a) is preferably at most 90 seconds, more preferably at most 60 seconds or at most 30 seconds. The residence time may be at least 2, 10 or 20 seconds. The residence time should be suitably selected such that the polyester and the hydrolytic stabilizer have sufficient time to react and thereby provide for a stabilized polyester. In order to determine the whether stabilization reactions have occurred the amount of hydrolytic stabilizer in the polyester obtained in step a) may be determined. If that amount is less than the amount that was fed to the first melt mixing device then stabilization reactions took place. Alternatively the effect may be determined on the basis of measurement of the properties of the finally obtained thermoplastic composition.

Essential to the invention is that the polyester is stabilized before the polyester is combined with the polycarbonate. The stabilized polyester is preferably combined with the polycarbonate directly after the stabilization step a) wherein the stabilized polyester is still in molten form. In that context the term "directly" means that the stabilized polyester is not subject to any further specific process steps and/or combined with any other materials in further equipment prior to being combined with the polycarbonate in the second melt mixing device.

Alternatively, although less preferred, the stabilized polyester may be pelletized and combined with the polycarbonate in step b) by feeding such pellets to a feed section of the step b) melt mixing device. This alternative allows the stabilized polyester to be prepared in larger quantities and stored for re-use whenever convenient. It is important however that the pelletized and stabilized polyester is then stored under dry conditions, i.e. conditions involving a relative humidity of at most 20 % at 25 °C.

The residence time in step b) is less critical and may be the same of different as that for step a). The melt mixing temperature in both the first and the second melt mixing device is preferably from 230°C - 350°C.

The melt mixing device used in step a) and/or b) is preferably an extruder.

The stabilized polyester from the first melt mixing device is fed into the second melt mixing device. The extrudate from the second melt mixing device can be cooled, for example in a water bath and pelletized. The pellets so prepared can be 0.6 cm long or less as desired. Such pellets can be used for subsequent molding, shaping, or forming into semi-finished or finished articles.

In accordance with the invention, the thermoplastic composition obtained or obtainable by the method as described above has, or is selected to have, in combination;
- an initial notched Izod impact determined in accordance with ISO 180-1A at a temperature of 23°C of at least 50 kJ/m²,
- a notched Izod impact retention of at least 80% determined in accordance with the method set out in the description,
- a heat distortion temperature, determined in accordance with ISO 75A flatwise at a load of 0.45 MPa, of at least 90⁰C, preferably 90°C to 120°C.

In a preferred aspect, the thermoplastic composition prepared by the method of the invention, exhibits a notched Izod impact retention of at least about 5%, preferably at least about 10%, more preferably at least about 20% higher than that of an identical composition, but not containing component (C).

Shaped, formed, or molded articles comprising the compositions are also provided. The compositions can be molded into articles by a variety of methods, such as injection molding, extrusion, and thermoforming. Some example of articles include automotive and vehicular body panels such as bumper covers and bumpers or a housing for electrical equipment.

Accordingly, the present invention relates to an article comprising or consisting of the thermoplastic composition or obtainable by the method disclosed herein, wherein preferably the article is an automotive interior article, or a housing for electrical equipment.

More in particular, the present invention relates to vehicular body parts or for housing of electrical equipment comprising or consisting the thermoplastic composition disclosed herein. Likewise, the present invention relates to a an article that comprises or constitutes any one or more selected from the group consisting of instrument panels, cup holders, glove boxes, dashboards, dashboard carriers, door claddings, door fixtures, armrests, pillar cladding, seat cladding, boot cladding and parts used in heating, ventilation and/or air conditioning instruments. Furthermore, the present invention relates to a vehicle or an electrical equipment comprising said vehicular body part or said housing. The present invention relates to the use of the thermoplastic composition, or obtainable by the method disclosed herein for the manufacture of an article of manufacture, preferably an automotive part, more preferably an interior automotive part. The present invention will now be further elucidated based on the following non-limiting examples. The examples and comparative examples disclosed herein provide the skilled person with materials that fall inside and outside the scope of the invention respectively, and thereby constitute a basis for the development of further embodiments according to the invention without undue burden.

The invention as disclosed herein is based on the finding that a composition comprising polyester, aromatic polycarbonate and a hydrolytic stabilizer is preferably manufactured such that the hydrolytic stabilizer is combined with the polyester prior to the polyester being combined with the aromatic polycarbonate.

Thus in an aspect the present invention relates to a method for the manufacture of a thermoplastic composition comprising the steps of combining stabilized polyester and aromatic polycarbonate, wherein the stabilized polyester is obtained by reacting polyester and a hydrolytic stabilizer composition in molten state.

The hydrolytic stabilizer is a compound capable of reacting with the acidic groups of the polyester such that these groups can no longer interact with (aromatic) polycarbonate resulting in degradation of the mechanical properties of polyester - aromatic polycarbonate compositions. In principle any hydrolytic stabilizing compound capable of such reaction with the polyester can be considered as suitable for the purpose of the present invention. Notwithstanding the foregoing, and while in principle there is no strict limitation on the type of stabilizer, the hydrolytic stabilizer composition preferably comprises, essentially consists or consists of compounds containing di-imide or epoxy functional groups. Such compounds are disclosed hereinabove in more detail. The amount of hydrolytic stabilizer composition, based on the weight of the stabilized polyester, may be from 0.1 - 25 wt.%, such as from 1 - 20 wt.%.

It is preferred that the polyester comprises at least 50 wt. %, preferably at least 75 wt. %, more preferably at least 95 wt. % of PBT on the basis of the weight of the polyester. The polyester may essentially consist or consist of a mixture of PBT and PET. The weight ratio between the PET and PBT may be from 0.1 - 10 and may be suitable selected in order to tune the final properties of the thermoplastic composition. It is advantageous that at least part of the PET is mechanically recycled PET, such as ocean-bound or ocean-derived recycled PET. All further preferred aspects of the thermoplastic composition and its method of manufacture are as described herein.

### Test Methods

| | |
|---|---|
| Impact & Hydro-ageing | Notched Izod impact (NII) properties were determined in accordance with to ISO 180/1A on injection molded samples being 80 x 10 x 4 mm in size. |
| | The initial test was carried out at 23°C. The impact energy is expressed in kJ/m². The test result is the average of 5 specimens. This gives the initial notched Izod impact or NII @ RT. |
| | Hydro-ageing is done at 85°C and 85% Relative Humidity for 168 hours and the NII properties (in kJ/m²) were measured post hydro-ageing according to ISO 180/1A after cooling the test samples to 23°C. The test result is the average of 5 specimens. This gives the final notched Izod impact or NII @ HA. |
| | The notched Izod impact retention (in %) upon hydro-ageing or NII Ret, is calculated as 100% x (NII@HA / NII@RT) |
| Intrinsic viscosity | The intrinsic viscosity of the polyesters was measured in a 3:2 weight to weight mixture of phenol: 1,2-dichlorobenzene at 25°C.. |
| Heat distortion temperature (HDT) | The heat distortion temperature, HDT (in °C) was determined in accordance with ISO 75A flatwise at a load of 1.8 MPa. |
| Molecular weight | The molecular weight of the polycarbonate and poly(butylene terephthalate) was measured by GPC method with polystyrene standard in an Agilent 1260 Infinity (SYS-LC-1260) equipment with PLGel 5µm Minimix C 250 x4.6 mm column and Refractive Index detector. The sample is dissolved in dichloromethane and the same solvent is used as carrier. |
| Tensile modulus | Tensile modulus was determined in accordance with ISO 527 at a temperature of 23 °C measured on injection molded specimens having dimensions of 170 x 10.0 x 4.0 mm. |
| Tensile strength | Tensile strength was determined in accordance with ISO 527 at a temperature of 23 °C measured on injection molded specimens having dimensions of 170 x 10.0 x 4.0 mm |
| Elongation at break (EB) | Tensile yield, or elongation at break, was determined in accordance with ISO 527 at a temperature of 23°C measured on injection molded specimens having dimensions of 170 x 10.0 x 4.0 mm |
| Melt volume rate (MVR) | The melt volume rate was determined in accordance with ISO 1133. For polycarbonate, measurements were carried out at a temperature of 300°C and a load of 1.2 kg. For the compositions, measurements were carried out at a temperature of 250°C and a load of 5.0 kg. |

### EXAMPLES

The components of the compositions and their source are listed in Table 1.

**Table 1: Components of the compositions and their source**

| | |
|---|---|
| PC | Bisphenol A polycarbonate manufactured using an interfacial process, having a melt volume rate of 6 cc/10 min, available from SABIC (PC 105) |
| PBT | Polybutylene terephthalate having an intrinsic viscosity of 1.2 dl/g as measured in a 1:1 weight to weight mixture of phenol: 1,1,2,2 - tetrachloro ethane at 25°C available from Chang Chun Plastics, Taiwan |
| ABS | HRG181 High Rubber Graft ABS Impact modifier having a polybutadiene content of 55 wt. %, available from Kumho, Korea |
| MBS | Paraloid MBS EXL 2650J core shell impact modifier having a polybutadiene content of 80 wt. %, commercially available from Dow |
| CDI | Polymeric carbodimide powder having carbodimide content of minimum 13 wt. % and melting in range of 100-120°C available from Lanxess, Europe |
| CDI-MB | A master batch of PBT (as mentioned above) and 3.5 wt. %, based on the weight of the master batch of CDI (as mentioned above) |
| ELV | Reactive elastomeric ethylene acrylate - glycidyl methacrylate terpolymer, having a density of 0.94 g/cm3, a melt flow rate of 8 g/10 min (ISO 1133, 190°C, 21.6 kg) commercially available as ELVALOY 4170 from DOW. |
| ELV-MB | A master batch of PBT (as mentioned above) and 17 wt. %, based on the weight of the master batch, of ELV (as mentioned above) |
| ERL | Bis epoxy compound, (3,4-Epoxycyclohexanemethyl 3,4-epoxycyclohexanecarboxylate) commercially available as ERL-4221 epoxy from Union Carbide. |
| ERL-MB | A master batch of PBT (as mentioned above) and 1.7 wt. %, based on the weight of the master batch of ERL (as mentioned above) |
| JCR | Styrene-(meth)acrylate copolymer containing glycidyl groups having a Mw of 6800, a Tg of 54°C and an epoxy equivalent weight of 285 g/mol, commercially available from BASF. The number of epoxy groups per unit chain length is about 23. |
| JCR-MB | A master batch of PBT (as mentioned above) and 1.7 wt. %, based on the weight of the master batch of JCR (as mentioned above) |
| MZP | Mono Zinc Phosphate, used as a quencher and commercially available from Budenheim as Budit T-21. |
| NaST | Sodium stearate available from PMC Biogenix, Inc, USA |
| AO | Stabilizer - hindered phenol Antioxidant Irganox 1010 from BASF |

In an example, the PBT is combined with the hydrolytic stabilizer composition, the impact modifier and the other components (viz. antioxidant) using a dry blender to form a dry mix. In examples where the hydrolytic stabilizer composition comprises at least one compound containing epoxy functional groups (viz. ERL, JCR or ELV, per Table 1), 0.1 parts of sodium stearate is also added, which catalyzes ring opening of epoxies and facilitates the capping of acid end group of PBT. The dry mix is melt mixed in an intermeshing, twin-screw extruder of Coperion make (Model ZSK-25) within the temperature range between 150°C to 260°C. The screw is of 25 mm in diameter with an L/D ratio of 41 and the screw revolution was maintained at 300 rpm during melt mixing. The residence time observed is ~ 40 sec. This results in the formation of a stabilized polyester (master batch). The stabilized polyester, thus formed, is then fed into the second melt mixing device (another intermeshing, twin-screw extruder of Coperion make (Model ZSK-25)) via a gravimetric feeder, whereby it is combined with the PC, and further melt mixed under the same conditions as the previous with a residence time of ~ 40 sec and extruded. Extruded pellets were dried thoroughly in a hot air circulating oven at 100°C for a minimum of four hours. The samples were molded by injection molding on L&T ASWA 100T Injection molding machine at 260°C, keeping the mold temperature set at 100°C for all compositions.

### COMPARATIVE EXAMPLES (CE1 - CE9) AND EXAMPLES (E1 - E9): Table 2

**Table 2: Formulations and properties for the PC/PBT thermoplastic compositions**

| **Sample #** | **CE1** | **CE2** | **CE3** | **CE4** | **CE5** | **CE6** | **CE7** | **CE8** | **CE9** | **E1** | **E2** | **E3** | **E4** | **E5** | **E6** | **E7** | **E8** | **E9** | |
|---|---|---|---|---|---|---|---|---|---|---|---|---|---|---|---|---|---|---|---|
| **PC** | 57.72 | 61.72 | 57.22 | 60.72 | 57.17 | 57.17 | 61.17 | 64.67 | 63.67 | 56.62 | 60.62 | 60.62 | 57.12 | 57.12 | 61.12 | 64.72 | 63.72 | 58.57 | |
| **PBT** | 30 | 30 | 30 | 30 | 30 | 30 | 30 | 30 | 30 | 1.1 | 1.1 | 1.1 | 0.6 | 0.6 | 0.6 | 5 | 13 | 16.1 | |
| **ABS** | 12 | | 12 | | 12 | 12 | | | | 12 | 8 | | 12 | 12 | | | | 7 | |
| **MBS** | | 8 | | 8 | | | 8 | | 3 | | | 8 | | | 8 | | 3 | | |
| **CDI** | | | 0.5 | 1 | | | | | | | | | | | | | | | |
| **CDI-MB** | | | | | | | | | | 30 | 30 | 30 | | | | | | 15 | |
| **ELV** | | | | | 0.5 | | | | | | | | | | | | | | |
| **ELV-MB** | | | | | | | | | | | | | 30 | | | | | | |
| **ERL** | | | | | | 0.5 | 0.5 | | | | | | | | | | | | |
| **ERL-MB** | | | | | | | | | | | | | | 30 | 30 | | | | |
| **JCR** | | | | | | | | 5 | 3 | | | | | | | | | 3 | |
| **JCR-MB** | | | | | | | | | | | | | | | | 30 | 20 | | |
| **MZP** | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | |
| **NaSt** | | | | | 0.05 | 0.05 | 0.05 | 0.05 | 0.05 | | | | | | | | | 0.05 | |
| **AO** | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | |
| **Total** | **100.0** | **100.0** | **100.0** | **100.0** | **100.0** | **100.0** | **100.0** | **100.0** | **100.0** | **100.0** | **100.0** | **100.0** | **100.0** | **100.0** | **100.0** | **100.0** | **100.0** | **100.0** | |

| **Properties** | **Unit of measure** | **CE1** | **CE2** | **CE3** | **CE4** | **CE5** | **CE6** | **CE7** | **CE8** | **CE9** | **E1** | **E2** | **E3** | **E4** | **E5** | **E6** | **E7** | **E8** | **E9** |
|---|---|---|---|---|---|---|---|---|---|---|---|---|---|---|---|---|---|---|---|
| **NII @ RT** | **KJ/m²** | 62 | 58 | 63 | 60 | 62 | 64 | 58 | 65 | 65 | 65 | 64 | 64 | 63 | 67 | 70 | 69 | 66 | 67 |
| **NII @ HA** | **KJ/m²** | 43 | 34 | 47 | 40 | 46 | 46 | 34 | 46 | 51 | 52 | 53 | 53 | 43 | 57 | 47 | 59 | 57 | 67 |
| **NII (Ret)** | **%** | 69 | 58 | 74 | 67 | 75 | 72 | 58 | 71 | 78 | 81 | 82 | 82 | 96 | 85 | 86 | 85 | 87 | 100 |
| **HDT** | **⁰C** | 95 | 92 | 91 | 90 | 91 | 89 | 93 | 95 | 92 | 92 | 94 | 91 | 93 | 91 | 92 | 98 | 93 | 91 |
| **Tensile Modulus** | **Gpa** | 2116 | 2166 | 2246 | 2112 | 2210 | 2210 | 2166 | 2202 | 2154 | 2156 | 2104 | 2104 | 2210 | 2162 | 2156 | 2116 | 2114 | 2046 |
| **Tensile Strength** | **Mpa** | 56 | 58 | 57 | 57 | 57 | 57 | 58 | 58 | 56 | 57 | 57 | 57 | 57 | 57 | 58 | 57 | 56 | 53 |
| **EB** | **%** | 67 | 66 | 79 | 99 | 42 | 80 | 66 | 64 | 46 | 109 | 116 | 116 | 73 | 110 | 74 | 98 | 97 | 100 |

The amounts in Table 2 are in weight percent based on the total weight of the composition. In all the examples, the total amount of components, equals 100 weight percent. Table 2 shows that thermoplastic compositions comprising PC/PBT and an impact modifier viz. ABS or MBS in absence of the hydrolytic stabilizer of the present invention (CE1 and CE2) do not show a desired hydro-ageing property in terms of notched Izod impact retention determined in accordance with the method set out above. For samples CE3 to CE9, the thermoplastic compositions comprising the desired hydrolytic stabilizer composition were prepared by simple blending all the components together in a high-speed mixer. Such compositions show a lower hydrolytic stability (in terms of NII (Ret) compared to similar composition that have been prepared according to the method as set out in the invention (E1 to E9).

## Claims

1. Method for the manufacture of a thermoplastic composition comprising aromatic polycarbonate, polyester, hydrolytic stabilizer composition, optionally impact modifier and optionally other components, comprising the steps of:
a) combining the polyester with the hydrolytic stabilizer composition in a first melt mixing device so as to form a stabilized polyester,
b) combining said stabilized polyester with the aromatic polycarbonate and optionally the impact modifier in a second melt mixing device.
wherein the hydrolytic stabilizer composition comprises at least one compound containing diimide and/or epoxy functional groups.

2. The method of claim 1, wherein the addition of the hydrolytic stabilizer composition in step (a) takes place either before the melting of the polyester, after the melting of the polyester or both before and after the melting of the polyester.

3. The method of claim 1 or 2, wherein the stabilized polyester from the first melt mixing device is fed into the second melt mixing device.

4. The method of any one or more of claims 1-3, wherein the melt mixing temperature in step a) is from 230°C to 350°C.

5. The method of any one or more of claims 1-4, wherein the residence time in step (a) is at most 90 seconds, preferably at most 60 seconds, more preferably at most 30 seconds.

6. The method of any one or more of claims 1-5, wherein the thermoplastic composition comprises, based on the weight of the composition
(A) from 40 to 70 wt. % of aromatic polycarbonate
(B) from 20 to 40 wt. % of polyester
(C) from 0.1 to 10 wt. % of hydrolytic stabilizer composition
(D) from 0 to 15 wt. % of impact modifier
(E) from 0 to 5 wt. % of other components
wherein, the combined amounts of (A) to (E) is 100 wt. %.

7. The method of any one or more of claims 1-6, wherein the polyester comprises, based on the weight of the polyester, at least 80 wt. %, preferably at least 90 wt. % of poly(butylene terephthalate), wherein preferably the polyester consists of poly(butylene terephthalate).

8. The method of any one or more of claims 1-7, wherein the impact modifier comprises or consists of at least one of acrylonitrile-butadiene-styrene (ABS) polymer and/or methyl-methacrylate butadiene-styrene (MBS) polymer.

9. The method of any one or more of claims 1-8, wherein the aromatic polycarbonate has a weight average molecular weight of 15,000 to 60,000 g/mol determined using gel permeation chromatography with polystyrene standards and/or wherein the polyester has an intrinsic viscosity of 0.4 to about 2.0 dl/g as measured in a 60:40 phenol/tetrachloroethane mixture at 23° C.

10. The method of any one or more of claims 1-9, wherein the other components comprises, based on the weight of the composition, from 0.01 to 1 wt. % of a compound selected from the group consisting of Group IB metal phosphate salts and Group IIB metal phosphate salts.

11. The method of any one or more of claims 1-10 wherein the other components comprises, based on the weight of the composition, from 0.01 to 1 wt. % of a compound, containing at least one of alkali metal cations or alkaline earth metal cations and a halide anion, preferably selected from one or more of the group comprising of lithium fluoride, lithium iodide, potassium bromide, potassium iodide, sodium dihydrogen phosphate, sodium acetate, sodium benzoate, sodium caproate, sodium stearate, sodium ascorbate and magnesium caproate.

12. The method of any one or more of claims 1-10, wherein the composition has, in combination,
- an initial notched Izod impact determined in accordance with ISO 180-1A at a temperature of 23°C of at least 50 kJ/m²,
- a notched Izod impact retention of at least 80% determined in accordance with the method set out in the description,
- a heat distortion temperature, determined in accordance with ISO 75A flatwise at a load of 1.8 MPa, of at least 90°C.

13. Thermoplastic composition obtained or obtainable by the method of any one or more of claims 1-12.

14. An article comprising or consisting of the thermoplastic composition of claim 13, wherein preferably the article is an automotive interior article, or a housing for electrical equipment.

15. Use of a thermoplastic composition obtainable by the method of any one or more of claims 1-12, for the manufacture of an article, preferably an automotive part, more preferably an interior automotive part.

## Patentansprüche

1. Verfahren zur Herstellung einer thermoplastischen Zusammensetzung, umfassend aromatisches Polycarbonat, Polyester, hydrolytische Stabilisatorzusammensetzung, optional einen Schlagzäh-Modifikator und optional andere Komponenten, umfassend die folgenden Schritte:
a) Kombinieren des Polyesters mit der hydrolytischen Stabilisatorzusammensetzung in einer ersten Schmelzmischvorrichtung, um einen stabilisierten Polyester zu bilden,
b) Kombinieren des stabilisierten Polyesters mit dem aromatischen Polycarbonat und optional dem Schlagzäh-Modifikator in einer zweiten Schmelzmischvorrichtung,
wobei die hydrolytische Stabilisatorzusammensetzung zumindest eine Dimid enthaltende Verbindung und/oder epoxyfunktionelle Gruppen umfasst.

2. Verfahren nach Anspruch 1, wobei das Hinzufügen der hydrolytischen Stabilisatorzusammensetzung in Schritt (a) entweder vor dem Schmelzen des Polyesters, nach dem Schmelzen des Polyesters oder sowohl vor als auch nach dem Schmelzen des Polyesters erfolgt.

3. Verfahren nach Anspruch 1 oder 2, wobei das stabilisierte Polyester aus der ersten Schmelzmischvorrichtung in die zweite Schmelzmischvorrichtung eingespeist wird.

4. Verfahren nach einem oder mehreren der Ansprüche 1-3, wobei die Schmelzmischtemperatur in Schritt a) zwischen 230 °C und 350 °C liegt.

5. Verfahren nach einem oder mehreren der Ansprüche 1-4, wobei die Verweilzeit in Schritt (a) höchstens 90 Sekunden, bevorzugt höchstens 60 Sekunden, bevorzugter höchstens 30 Sekunden beträgt.

6. Verfahren nach einem oder mehreren der Ansprüche 1-5, wobei die thermoplastische Zusammensetzung, basierend auf dem Gewicht der Zusammensetzung, umfasst:
(A) von 40 bis 70 Gew.-%. aromatisches Polycarbonat
(B) von 20 bis 40 Gew.-% Polyester
(C) von 0,1 bis 10 Gew.-% hydrolytische Stabilisatorzusammensetzung
(D) von 0 bis 15 Gew.-% Schlagzäh-Modifikator
(E) von 0 bis 5 Gew.-% andere Komponenten
wobei die Mengen von (A) bis (E) zusammen 100 Gew.-% betragen.

7. Verfahren nach einem oder mehreren der Ansprüche 1-6, wobei das Polyester, basierend auf dem Gewicht des Polyesters, zumindest 80 Gew.-%, bevorzugt zumindest 90 Gew.-% Poly(butylenterephthalat) umfasst, wobei der Polyester bevorzugt aus Poly(butylenterephthalat) besteht.

8. Verfahren nach einem oder mehreren der Ansprüche 1-7, wobei der Schlagzäh-Modifikator zumindest eines von Acrylnitril-Butadien-Styrol (ABS)-Polymer und/oder Methylmethacrylat-Butadien-Styrol (MBS)-Polymer umfasst oder daraus besteht.

9. Verfahren nach einem oder mehreren der Ansprüche 1-8, wobei das aromatische Polycarbonat ein unter Verwendung von Gelchromatographie mit Polystyrolstandards bestimmtes Massenmittel von 15.000 bis 60.000 g/mol aufweist und/oder wobei das Polyester eine wie in einer 60:40-Phenol/Tetrachloroethan-Mischung bei 23° C gemessene Grenzviskosität von 0,4 bis etwa 2,0 dl/g aufweist.

10. Verfahren nach einem oder mehreren der Ansprüche 1-9, wobei die anderen Komponenten, basierend auf dem Gewicht der Zusammensetzung, von 0,01 bis 1 Gew.-% einer Verbindung umfassen, welche aus der Gruppe bestehend aus Metallphosphatsalzen der Gruppe IB und Metallphosphatsalzen der Gruppe IIB ausgewählt ist.

11. Verfahren nach einem oder mehreren der Ansprüche 1-10, wobei die anderen Komponenten, basierend auf dem Gewicht der Zusammensetzung, von 0,01 bis 1 Gew.-% einer Verbindung umfassen, welche zumindest eines von Alkalimetallkationen oder Erdalkalimetallkationen und ein Halogenidanion enthält, bevorzugt ausgewählt aus einem oder mehreren aus der Gruppe, welche Lithiumfluorid, Lithiumiodid, Kaliumbromid, Kaliumiodid, Natriumdihydrogenphosphat, Natriumacetat, Natriumbenzoat, Natriumcaproat, Natriumstearat, Natriumascorbat und Magnesiumcaproat umfasst.

12. Verfahren nach einem oder mehreren der Ansprüche 1-10, wobei die Zusammensetzung in Kombination aufweist:
- eine gemäß ISO 180-1A bei einer Temperatur von 23 °C bestimmte anfängliche Izod-Kerbschlagzähigkeit von zumindest 50 kJ/m²,
- eine nach dem in der Beschreibung dargelegten Verfahren bestimmte Beibehaltung der Izod-Kerbschlagzähigkeit von zumindest 80 %,
- eine nach ISO 75A senkrecht zu den Schichten bei einer Belastung von 1,8 MPa bestimmte Wärmeformbeständigkeit von zumindest 90°C.

13. Thermoplastische Zusammensetzung, welche durch das Verfahren nach einem oder mehrerer der Ansprüche 1-12 erhalten wird oder erhältlich ist.

14. Artikel, welcher die thermoplastische Zusammensetzung nach Anspruch 13 umfasst oder daraus besteht, wobei es sich bei dem Artikel bevorzugt um einen Automobilinnenraumartikel oder ein Gehäuse für elektrische Ausrüstung handelt.

15. Verwendung einer thermoplastischen Zusammensetzung, welche durch das Verfahren nach einem oder mehreren der Ansprüche 1-12 erhältlich ist, zur Herstellung eines Artikels, bevorzugt eines Automobilteils, bevorzugter eines Automobilinnenraumteils.

## Revendications

1. Procédé de fabrication d'une composition thermoplastique comprenant du polycarbonate aromatique, du polyester, une composition stabilisatrice hydrolytique, éventuellement un modificateur d'impact et éventuellement d'autres composants, comprenant les étapes de :
a) combinaison du polyester avec la composition de stabilisant hydrolytique dans un premier dispositif de mélange à l'état fondu afin de former un polyester stabilisé,
b) combinaison dudit polyester stabilisé avec le polycarbonate aromatique et éventuellement le modificateur d'impact dans un deuxième dispositif de mélange à l'état fondu,
dans lequel la composition stabilisatrice hydrolytique comprend au moins un composé contenant des groupes fonctionnels diimide et/ou époxy.

2. Procédé selon la revendication 1, dans lequel l'ajout de la composition stabilisatrice hydrolytique à l'étape (a) a lieu soit avant la fusion du polyester, soit après la fusion du polyester, soit à la fois avant et après la fusion du polyester.

3. Procédé selon la revendication 1 ou 2, dans lequel le polyester stabilisé provenant du premier dispositif de mélange à l'état fondu est introduit dans le deuxième dispositif de mélange à l'état fondu.

4. Procédé selon une ou plusieurs des revendications 1-3, dans lequel la température de mélange fondu à l'étape a) est comprise entre 230 °C et 350 °C.

5. Procédé selon l'une ou plusieurs des revendications 1-4, dans lequel le temps de séjour à l'étape (a) est au plus de 90 secondes, de préférence au plus de 60 secondes, plus préférentiellement au plus de 30 secondes.

6. Procédé selon une ou plusieurs des revendications 1-5, dans lequel la composition thermoplastique comprend, en fonction du poids de la composition
(A) de 40 à 70 % en poids de polycarbonate aromatique
(B) de 20 à 40 % en poids de polyester
(C) de 0,1 à 10 % en poids de composition de stabilisant hydrolytique
(D) de 0 à 15 % en poids de modificateur d'impact
(E) de 0 à 5 % en poids d'autres composants
dans lequel les quantités combinées de (A) à (E) sont de 100 % en poids.

7. Procédé selon l'une ou plusieurs des revendications 1-6, dans lequel le polyester comprend, en fonction du poids du polyester, au moins 80 % en poids, de préférence au moins 90 % en poids de poly(téréphtalate de butylène), dans lequel de préférence le polyester est constitué de poly(téréphtalate de butylène).

8. Procédé selon une ou plusieurs des revendications 1-7, dans lequel le modificateur d'impact comprend ou est constitué d'au moins un polymère d'acrylonitrile-butadiène-styrène (ABS) et/ou un polymère de méthacrylate de méthyle butadiène-styrène (MBS).

9. Procédé selon une ou plusieurs des revendications 1-8, dans lequel le polycarbonate aromatique présente une masse moléculaire moyenne en poids de 15 000 à 60 000 g/mol déterminé par chromatographie d'exclusion sur gel avec des étalons de polystyrène et/ou dans lequel le polyester présente une viscosité intrinsèque de 0,4 à environ 2,0 dl/g telle que mesurée dans un mélange 60:40 de phénol/tétrachloroéthane à 23 °C.

10. Procédé selon l'une ou plusieurs des revendications 1-9, dans lequel les autres composants comprennent, en fonction du poids de la composition, de 0,01 à 1 % en poids d'un composé sélectionné parmi le groupe constitué des sels de phosphate métallique du groupe IB et des sels de phosphate métallique du groupe IIB.

11. Procédé selon l'une ou plusieurs des revendications 1 à 10, dans lequel les autres composants comprennent, en fonction du poids de la composition, de 0,01 à 1 % en poids d'un composé contenant au moins un cation de métal alcalin ou de métal alcalino-terreux et un anion halogénure, de préférence choisi parmi un ou plusieurs des composés suivants : fluorure de lithium, iodure de lithium, bromure de potassium, iodure de potassium, dihydrogénophosphate de sodium, acétate de sodium, benzoate de sodium, caproate de sodium, stéarate de sodium, ascorbate de sodium et caproate de magnésium.

12. Procédé selon une ou plusieurs des revendications 1-10, dans lequel la composition présente, en combinaison,
- une résilience Izod initiale sur éprouvette entaillée, déterminée conformément à la norme ISO 180-1A à une température de 23 °C, d'au moins 50 kJ/m²,
- une rétention de choc Izod entaillée d'au moins 80 % déterminée conformément au procédé décrit dans la description,
- une température de déformation thermique, déterminée conformément à la norme ISO 75A à plat sous une charge de 1,8 MPa, d'au moins 90 °C.

13. Composition thermoplastique obtenue ou pouvant être obtenue par le procédé selon l'une ou plusieurs des revendications 1-12.

14. Article comprenant ou constitué de la composition thermoplastique de la revendication 13, dans lequel de préférence l'article est un article d'intérieur automobile ou un boîtier pour équipement électrique.

15. Utilisation d'une composition thermoplastique obtenue par le procédé selon une ou plusieurs des revendications 1-12, pour la fabrication d'un article, de préférence une pièce automobile, plus préférentiellement une pièce intérieure automobile.
